# EUROPEAN PATENT APPLICATION

(11) **EP 4 393 623 A1**
(43) Date of publication of application: **03.07.2024**
(21) Application number: 22860930.1
(22) Date of filing: 10.06.2022
(51) Int. Cl.: B23D 19/00, B28D 1/04, B28D 7/04, B23D 47/00, B28B 1/50, B28B 11/14, E04C 2/04

(54) **CUTTING DEVICE, METHOD FOR MANUFACTURING GYPSUM BOARD, AND CUTTING METHOD**

(30) Priority: 26.08.2021 JP 2021138316
(71) Applicant: Yoshino Gypsum Co., Ltd., Tokyo 100-0005 (JP)
(72) Inventor: SOMENO, Hiroyuki, Tokyo 100-0005 (JP); ISHIBASHI, Hidenori, Tokyo 100-0005 (JP)
(74) Representative: Wächtershäuser & Hartz Patentanwaltspartnerschaft mbB
(86) International application number: PCT/JP2022/023472
(87) International publication number: WO 2023/026636

(57) **Abstract**

There is provided a cutting apparatus with which, even if a plate body to be cut is warped, it is easy to obtain a cut product of the same quality as when a plate body which is not warped is cut. The cutting apparatus is provided on a conveyor for conveying a plate body and cuts the plate body being conveyed by the conveyor. The cutting apparatus includes a cutting blade that cuts the plate body in a direction parallel to a direction of conveying the plate body, and a pressing unit including, at a side position of the cutting blade, a pressing plate provided to be movable between a pressing position where the pressing plate presses the plate body and a retracted position where the pressing plate is retracted from the pressing position. The cutting apparatus cuts the plate body with the cutting blade while pressing the plate body with the pressing plate.

## Description

### Technical Field

The present invention relates to a cutting apparatus, an apparatus for manufacturing a gypsum board, and a cutting method.

### Background Art

A gypsum board is known as a material obtained by covering a core material mainly composed of gypsum with lining paper for gypsum board (hereinafter, sometimes referred to as board lining paper). Gypsum boards are mainly used as interior building materials because of having properties such as fireproof/fire resistant properties, sound insulation properties, construction efficiency, and economic efficiency.

Calcined gypsum obtained by calcining gypsum in a furnace is used as a gypsum raw material for a gypsum board. Calcined gypsum has a characteristic of reacting with water to solidify. In general, a gypsum board produced in a factory is manufactured by a manufacturing apparatus (manufacturing line) employing a continuous cast molding method. In the continuous cast molding method, a gypsum slurry obtained by mixing calcined gypsum and water is cast and spread on cover paper and/or backing paper of board lining paper to form a continuous laminate in which the gypsum slurry is sandwiched therebetween. The continuous laminate is roughly cut for every predetermined length to form belt-like laminates. The laminates thus shaped are fed onto a conveyor as raw plates for gypsum boards, set while being conveyed by the conveyor, and dried in a dryer (furnace). Subsequently, as a finishing process, the laminates, which are semi-finished products for gypsum boards, are cut by a cutting machine provided on a conveying path by a conveyor into dimensions as gypsum board products. Gypsum boards are continuously manufactured by the process as described above.

The above-described cutting machine is also referred to as a sizer. For example, Patent Literature 1 and Patent Literature 2 can be cited as literatures disclosing a cutting machine that can be used for manufacturing a plate product for a building material, such as a gypsum board. Patent Literature 1 describes a continuous standard-length cutting apparatus for a plate product, which includes a standard-length detector, a moving base provided with a cutting stand and a pressing stand, a cutter apparatus provided with a cutter blade, and a product-pressing apparatus provided with a pressing block. Patent Literature 2 describes a movable cutting apparatus including a fixing apparatus for a board molded body for building and a cutter for cutting that moves in a width direction.

### Citation List

### Patent Literature

Patent Literature 1: Japanese Patent Laid-Open No. 56-126599
Patent Literature 2: Japanese Patent Laid-Open No. 8-243982

### Summary of Invention

### Technical Problem

According to studies conducted by the present inventors, it has been found that when a semi-finished product (plate-shaped semi-finished product) for a gypsum board is cut with a cutting machine at the time of finish in a manufacturing apparatus employing the above-described continuous cast molding method, fluffing of the board lining paper may occur in the cut cross section. The present inventors have studied the cause and have considered the cause as follows. The time of finish is immediately after the plate-shaped semi-finished product is dried, and therefore a warp may occur in the plate-shaped semi-finished product due to moisture of the plate-shaped semi-finished product. It has been considered that due to the warp, cutting of the plate-shaped semi-finished product is carried out in a state where the lower surface of the plate-shaped semi-finished product to be cut is not pressed and there is a gap below the lower surface, and as a result, the board lining paper in the plate-shaped semi-finished product is not neatly cut, causing the fluffing to occur.

When a warped plate body, such as the above-described plate-shaped semi-finished product, is cut, it is considered that the plate body to be cut may be prevented from being neatly cut, which is not limited only to the above-described semi-finished product (plate-shaped semi-finished product) for a gypsum board.

Accordingly, the present invention intends to provide a cutting apparatus with which, even if a plate body to be cut is warped, it is easy to obtain a cut product of the same quality as when a plate body which is not warped is cut. Further, the present invention intends to provide an apparatus for manufacturing a gypsum board, including the cutting apparatus, and a cutting method using the cutting apparatus.

### Solution to Problem

The present invention provides a cutting apparatus that is provided on a conveyor for conveying a plate body and cuts the plate body being conveyed by the conveyor, the cutting apparatus including: a cutting blade that cuts the plate body in a direction parallel to a direction of conveying the plate body; and a pressing unit having, at a side position of the cutting blade, a pressing plate provided to be movable between a pressing position where the pressing plate presses the plate body and a retracted position where the pressing plate is retracted from the pressing position, wherein the cutting apparatus cuts the plate body with the cutting blade while pressing the plate body with the pressing plate.

Further, the present invention provides an apparatus for manufacturing a gypsum board, including the cutting apparatus. Furthermore, the present invention provides a cutting method using the cutting apparatus.

### Advantageous Effects of Invention

The present invention can provide a cutting apparatus with which, even if a plate body to be cut is warped, it is easy to obtain a cut product of the same quality as when a plate body which is not warped is cut. Further the present invention can provide an apparatus for manufacturing a gypsum board, including the cutting apparatus, and a cutting method using the cutting apparatus.

### Brief Description of Drawings

[Figure 1] Figure 1 is a schematic diagram showing a schematic configuration of a cutting apparatus according to one embodiment of the present invention and showing a state in which a pressing plate is at a retracted position.
[Figure 2] Figure 2 is a schematic diagram showing a schematic configuration of a cutting apparatus according to one embodiment of the present invention and showing a state in which a pressing plate is at a pressing position.
[Figure 3] Figure 3 is a schematic diagram showing a schematic configuration of a cutting apparatus of another embodiment of the present invention and corresponding to Figure 2.
[Figure 4] Figure 4 is a schematic perspective view showing a main part of a cutting apparatus for explaining a state where a plate body is being cut using a cutting apparatus of one embodiment of the present invention.
[Figure 5] Figure 5 is a diagram for explaining a cutting method of one embodiment of the present invention and is a schematic plan view of a long belt-like plate body.
[Figure 6] Figure 6 is a diagram showing a schematic configuration of an apparatus for manufacturing a gypsum board of one embodiment of the present invention.

### Description of Embodiments

Hereinafter, embodiments for carrying out the present invention will be described, but the present invention is not limited to the following embodiments, and various modifications and replacements can be made to the embodiments without departing from the scope of the present invention.

### <Cutting Apparatus>

As described above, in the case where a gypsum board is manufactured with a manufacturing apparatus employing a continuous cast molding method using a gypsum slurry, it has been found that when a semi-finished product (plate-shaped semi-finished product) for a gypsum board is cut at the time of finish, fluffing of the board lining paper may occur in the cut cross section. The time of finish is immediately after the plate-shaped semi-finished product is dried, and therefore a warp such that both ends of the plate-shaped semi-finished product are warped upward may occur due to moisture of the plate-shaped semi-finished product. The warp occurs at both end parts in the longitudinal direction of the plate-shaped semi-finished product and both end parts in the width direction of the plate-shaped semi-finished product, and in particular, a relatively large warp is likely to occur at both end partis in the longitudinal direction. In addition, as the time from a drying step to a cutting step is shorter, cutting is performed in a state where the warp is relatively larger. Due to the warp as described above, a gap is formed, at the time of cutting, between the plate-shaped semi-finished products in the case of cutting the plate-shaped semi-finished product in a two-ply state, or between the plate-shaped semi-finished product and a stand on which the semi-finished product is placed. It is considered that due to the presence of the gap, cutting of the plate-shaped semi-finished product is performed in a state where the lower surface of the plate-shaped semi-finished product to be cut is not pressed, and as a result, the board lining paper is not cut neatly and fluffing occurs.

When the plate-shaped semi-finished products are stacked in a pile, the weight of the plate-shaped semi-finished products reduces the warp of the plate-shaped semi-finished products present in the lower part of the pile. In addition, when the plate-shaped semi-finished product after drying is cooled, the warp of the plate-shaped semi-finished product is considered to be slightly reduced. However, from the viewpoint of enhancing the production efficiency of gypsum boards, it is desired that the plate-shaped semi-finished product can be cut immediately after drying, that is, even when the plate-shaped semi-finished product is warped because it is in a state immediately after drying, the plate-shaped semi-finished product can be neatly cut without causing fluffing of the board lining paper.

In addition, there is a risk that not only the above-described plate-shaped semi-finished product which is a pre-stage of the gypsum board but also a plate body which is warped or which may be warped at the time of cutting cannot be neatly cut due to the warp. Therefore, the present inventors have conducted studies on technical means that makes it possible to cut a plate body to be cut with the same quality as when a plate body which is not warped is cut, even if the plate body to be cut is warped.

As a means in the studies, it has been studied to use an apparatus that suppresses the warp by force of a plate spring together with a cutting machine at the time of cutting the plate body. However, with the apparatus utilizing a plate spring, it is difficult to adjust the plate spring in accordance with the thickness and degree of warp of a plate body, so that it is difficult to make the force for pressing the plate body constant, and therefore, the plate body may be damaged. Further, when the apparatus utilizing a plate spring is repeatedly used, the plate spring may thereby be damaged.

Thus, the present inventors have conducted studies using a cutting apparatus including a cutting blade that is used for cutting a plate body, wherein a pressing plate capable of pressing the plate body at the time of cutting the plate body is provided, and the pressing plate is provided to be movable when the plate body is pressed and the pressing is released. As a result, the present inventors have found that, by using such a cutting apparatus, the plate body can be cut while the plate body is pressed by the pressing plate, even if the plate body is warped, and thereby a cut product having the same quality as when a plate body which is not warped is cut can be obtained. With regard to the above-described semi-finished product (plate-shaped semi-finished product) for a gypsum board, the present inventors have found that even if the plate-shaped semi-finished product is warped, the occurrence of fluffing of the board lining paper at the time when the plate-shaped semi-finished product is cut can be suppressed.

A cutting apparatus according to one embodiment of the present invention is provided on a conveyor for conveying a plate body and cuts the plate body being conveyed by the conveyor and has been completed based on the above-described findings of the present inventors. That is, the cutting apparatus of the present embodiment includes: a cutting blade that cuts the plate body in a direction parallel to a direction of conveying the plate body; and a pressing unit comprising, at a side position of the cutting blade, a pressing plate provided to be movable between a pressing position where the pressing plate presses the plate body and a retracted position where the pressing plate is retracted from the pressing position. The cutting apparatus of the present embodiment cuts the plate body with the cutting blade while pressing the plate body with the pressing plate.

By using the cutting apparatus of the present embodiment, an action of cutting the plate body with the cutting blade can be performed while the pressing plate moved to the pressing position presses the plate body downward at the side position of the cutting blade. Therefore, even if the plate body is warped, it is possible to perform cutting, by pressing the plate body with the pressing plate, in a state where a gap between the plate body and the conveyor (or a stand on which the plate body is placed on the conveyor) due to the warp is unlikely to occur. As a result, even if a plate body to be cut is warped, it is possible to obtain a cut product of the same quality as when a plate body which is not warped is cut. For example, even when the plate body is a plate-shaped semi-finished product immediately after drying at the time of finish in the manufacturing process of a gypsum board, which is likely to be warped, and is warped at the time of cutting, it is possible to suppress the occurrence of fluffing of the board lining paper on the cut surface of the plate-shaped semi-finished product, as well as when a plate-shaped semi-finished product which is not warped is cut.

In addition, since the pressing plate included in the cutting apparatus of the present embodiment is provided to be movable between the pressing position and the retracted position, it is easy to avoid collision between the plate body conveyed to the cutting apparatus and the pressing plate in the conveying direction. Therefore, it is made possible that damage of the plate body due to the collision is less likely to occur, and failure of the pressing plate due to repeated use is also less likely to occur.

Hereinafter, a configuration example of the cutting apparatus of the present embodiment will be described with reference to the drawings. Note that in the drawings, common components are denoted by the same reference numerals, and redundant description thereof may be omitted.

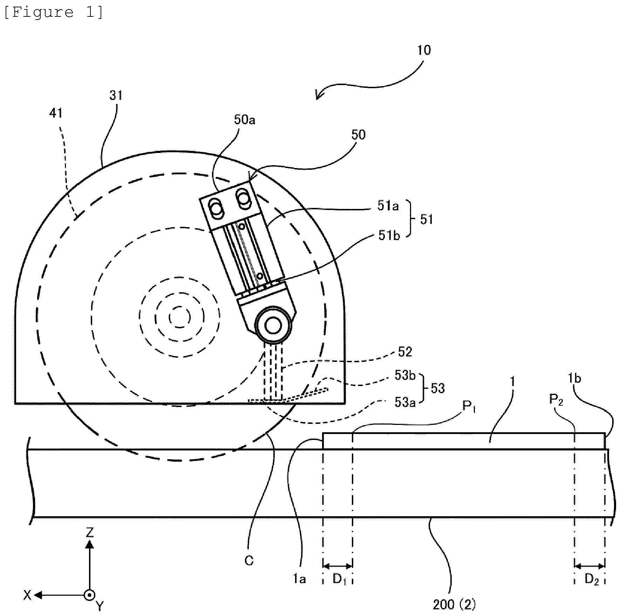

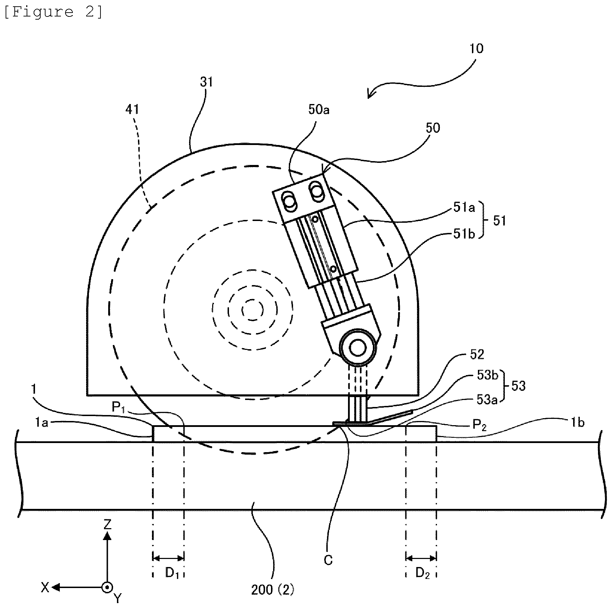

Each of Figure 1 and Figure 2 is a diagram showing a schematic configuration of a cutting apparatus 10 of the present embodiment and schematically shows a side view of a plane parallel to a height direction (the Z-axis direction in the figures) of the cutting apparatus 10 and a direction of conveying a plate body 1 to be cut by the cutting apparatus 10 (the X-axis direction in the figures). Figure 1 is a schematic diagram showing a state of the cutting apparatus 10 before cutting the plate body 1. Figure 2 is a schematic diagram showing a part of states of the cutting apparatus 10 during cutting the plate body 1.

The plate body 1 (herein, sometimes simply referred to as "plate body") to be cut by the cutting apparatus 10 only needs to have a plate shape. Examples of the plate body 1 include plate-shaped semi-finished products or plate-shaped products containing, as a raw material, an inorganic material, such as a ceramic, gypsum, and mortar; a polymeric material, such as a resin; an organic material, such as paper and wood; or the like. Among others, the plate body 1 which is likely to be warped in the processes up to a cutting step is suitable because the technical significance of using the cutting apparatus of the present embodiment is enhanced. From that viewpoint, the plate body 1 is, as described above, preferably a semi-finished product (plate-shaped semi-finished product) for a gypsum board. As used herein, the semi-finished product for a gypsum board refers to one which is in the middle of manufacturing of a gypsum board and finally made into a gypsum board (product).

The plate body 1 is conveyed to the cutting apparatus 10 by a conveyor 200. On this occasion, the plate body 1 may be conveyed on the conveyor 200, or may be conveyed on a stand 2, such as a wood stand, placed or installed on the conveyor 200. When the plate body 1 is cut by the cutting apparatus 10, the plate body 1 is being conveyed from the right side to the left side in Figure 1 and Figure 2, that is, along the X-axis direction in Figure 1 and Figure 2. The cutting apparatus 10 is disposed on the conveyance path for the plate body 1 and provided on a conveyor 200 that conveys the plate body 1.

When the plate body 1 is conveyed to the cutting apparatus 10, the plate body 1 and the placement surface of the conveyor 200 can be disposed so as to be separated from each other. For example, the plate body 1 is preferably placed and conveyed through the stand 2, such as a wood stand, provided on the conveyor 200 in the width direction (the Y-axis direction in the figures) of the conveyor 200. Specifically, a pair of chain conveyors can be used as the conveyor 200. More preferably, a frame (not shown) is provided between the chain conveyors, one or more stands 2 are provided in this frame by fixing the stands 2 to the frame with screws (not shown) or the like, and the plate 1 is placed and conveyed on the stands 2. In this case, the upper surface of the stand 2 serves as a placement surface for the plate body 1 and is located at substantially the same position as the upper surface of the chain conveyors 200. Note that the conveyor 200 is not limited to chain conveyors, and other conveyors can appropriately be employed.

The cutting apparatus 10 includes a cutting blade 41 that cuts the plate body 1 in a direction parallel to a direction (the X-axis direction in the figures) of conveying the plate body 1. The cutting blade 41 can be provided in a hood 31 that is a part of a housing in the cutting apparatus 10. As the cutting blade 41, for example, a disc-shaped rotary blade or the like can be used. The cutting blade 41 can be constantly driven during the operation of the conveyor 200.

The cutting apparatus 10 includes a pressing unit 50 provided at a side position of the cutting blade 41. The pressing unit 50 has, at a side position of the cutting blade 41, a pressing plate 53 provided to be movable between a pressing position (see Figure 2) where the pressing plate 53 presses the plate body 1 and a retracted position (see Figure 1) where the pressing plate 53 is retracted from the pressing position. The pressing plate 53 provided in the pressing unit 50 in this way, when located at the retracted position as shown in Figure 1, can be separated from the plate body 1. In addition, the pressing plate 53, when moved to the pressing position as shown in Figure 2, can press the plate body 1 downward (with respect to the conveyor 200 or the stand 2). The pressing plate 53 is preferably provided such that, when the pressing plate 53 is moved to the pressing position (see Figure 2), the pressing plate 53 is disposed between a position (on the upstream side of the plate body 1) immediately before a contact point C of the cutting blade 41 with the plate 1 (an end surface 1a of the plate 1 on the downstream side in the direction of conveying the plate body 1) conveyed and the contact point C.

The pressing unit 50 can include a movable mechanism 51 for making the pressing plate 53 movable as described above. Examples of the movable mechanism 51 include power cylinders, such as an air cylinder, an oil hydraulic cylinder, and an electric cylinder. Among these, the pressing unit 50 preferably has an air cylinder 51 that moves the pressing plate 53 between the pressing position and the retracted position. In Figure 1 and Figure 2, the air cylinder 51 including an outer cylinder part 51a, a rod part 51b, and the like is shown as one example. The air cylinder 51, when being in a contracted state (see Figure 1), can move the pressing plate 53 to the retracted position and, when being in an extended state (see Figure 2), can move the pressing plate 53 to the pressing position.

The upper end part 50a of the air cylinder 51 exemplified in Figure 1 and Figure 2 is provided to be obliquely inclined toward the downstream side in the direction of conveying the plate body 1 with respect to the direction perpendicular to the surface of the plate body 1, but the outer cylinder part 51a may be provided in the direction perpendicular to the surface of the plate body 1. If the plate body 1 collides with the pressing plate 53 when the action of the air cylinder 51 is delayed or malfunctions, force in the horizontal direction is applied to the air cylinder 51, but when the air cylinder 51 is provided obliquely as described above, the force is easily released. This makes it easy to avoid the occurrence of damage to the air cylinder 51 and the plate body 1.

Further, the pressing unit 50 preferably drives the air cylinder 51 in accordance with the position of the plate body 1. By associating the position of the plate body 1 conveyed by the conveyor 200 and the situation of cutting of the plate body 1 with the cutting blade 41 with driving of the air cylinder 51 in this way, it made possible to execute a preferable action as described below. Thereby, an efficient cutting action can be performed, and as a result, the productivity of products manufactured from the plate body 1 can further be enhanced.

For example, when the end part (the end part on the downstream side in the conveying direction) of the plate body 1 is conveyed to a predetermined position below the pressing plate 53, the pressing unit 50 preferably drives the air cylinder 51 downward to move the pressing plate 53 to the pressing position and press the plate body 1 with the pressing plate 53. By executing such an action, impact is hardly applied on the plate body 1 side, so that the plate body 1 can be strongly pressed with the pressing plate 53. As the above-described action, the pressing plate 53 can be lowered when a position P₁ in the plate body 1 at a predetermined distance D₁ from an end surface (front end) 1a on the downstream side in the conveying direction toward the upstream side in the conveying direction (direction opposite to the conveying direction) passes below the pressing plate 53. For example, when a gypsum board is manufactured (when the plate body 1 is a semi-finished product for a gypsum board), the predetermined distance D₁ is preferably 0 to 110 mm (0 mm ≤D₁≤110 mm), and more preferably 0 to 100 mm (0 mm≤D₁≤110 mm). Specifically, the air cylinder 51 is more preferably driven downward when the position P₁ of the plate body 1 at the predetermined distance D₁ in the above range passes through the center of the rod part 51b of the air cylinder 51. The setting of the predetermined length D₁ can be performed, for example, by an operator inputting in advance via a touch panel of the cutting apparatus before the operation.

In addition, for example, the pressing unit 50 preferably drives the air cylinder 51 upward to move the pressing plate 53 to the retracted position immediately before cutting of the plate body 1 is finished. By executing such an action, before the plate body 1 yields to the pressing force and brings about a situation where a crack or corner chipping occurs when a part which is not cut in a cutting place in the plate body 1 becomes slight immediately before cutting of the plate body 1 is finished, pressing can be released due to the retraction of the pressing plate 53, and thus the above-described situation can be avoided. In addition, it is possible to suppress the cut end of the plate body 1 from being caught by the cutting blade 41, which makes it possible to contribute to an improvement in quality of a product to be produced. As the above-described action, the pressing plate 53 can be raised when a position P₂ in the plate body 1 at a predetermined distance D₂ from an end surface (rear end) 1b on the upstream side in the conveying direction toward the downstream side in the conveying direction (the X-axis direction that is the conveying direction) passes below the pressing plate 53. For example, when a gypsum board is manufactured (when the plate body 1 is a semi-finished product for a gypsum board), the predetermined distance D₂ is preferably 0 to 110 mm (0 mm ≤D₂≤110 mm), and more preferably 0 to 100 mm (0 mm≤D₂≤100 mm). Specifically, the air cylinder 51 is more preferably driven upward when the position P₂ of the plate body 1 at the predetermined interval D₂ in the above range passes through the center of the rod part 51b of the air cylinder 51. The setting of the predetermined distance D₂ can be performed, for example, by an operator inputting in advance via a touch panel of the cutting apparatus before the operation.

Driving of the air cylinder 51 according to the position of the plate body 1 with the pressing unit 50 as described above can be executed by a control unit (not shown) provided at the pressing unit 50 by being built in or connected to the pressing unit 50. Examples of the control unit include a servo motor, a computer, a CPU, a processor, a microcomputer, a sensor, an inverter, a sequencer, and the like, and two or more thereof can be used in combination. For example, a sequencer or the like that controls extension and contraction of the air cylinder based on the input via a touch panel by an operator in accordance with the type and length of the plate body 1 can be provided.

Preferably, the control unit is capable of detecting the position of the plate body 1 being conveyed by the conveyor 200, or the cutting apparatus 10 further includes another control unit capable of detecting the position of the plate body 1. When the position of the plate body 1 can be detected, thereby the air cylinder 51 can be driven by detecting that the plate body 1 has been conveyed to a predetermined position.

For example, a configuration can be made such that the position of the plate body 1 being conveyed by the conveyor 200 is detected by a sensor, and the air cylinder 51 is driven based on the position information. Further, for example, driving of the air cylinder 51 can be controlled by driving the conveyor 200 by a servo motor, determining the position of the plate body 1 from an encoder of the servo motor, and using a sequencer or the like.

The pressing unit 50 is preferably configured so as to be capable of making the force for pressing the plate body 1 with the pressing plate 53 constant, and is more preferably configured so as to be capable of adjusting the force for pressing the plate body 1 with the pressing plate 53 in accordance with at least one state of the thickness and the warp of the plate body 1. For example, the pressing unit 50 can be configured as described above by providing a pressure regulator in the pressing unit 50.

The pressing plate 53 in the pressing unit 50 is provided at a side position of the cutting blade 41. It is preferable to press the vicinity of a cutting place to be cut by the cutting blade 41 with the pressing plate 53 when the plate body 1 is cut, because a gap between the plate body 1 and the conveyor 200 or between the plate body 1 and the stand 2 on which the plate body 1 is placed on the conveyor 200 is less likely to be formed. From this viewpoint, the distance between the pressing plate 53 and the cutting blade 41 (the interval along the Y-axis direction in the figures) is preferably 1 mm to 30 mm, and more preferably 1 mm to 5 mm. Note that the pressing plate 53 may be provided on the outer side or on the inner side of the cutting blade 41.
When the pressing plate 53 is provided on the outer side of the cutting blade 41, thereby the cut surface can be made into neater cut end without fluffing of the board lining paper. When the pressing plate 53 is provided on the inner side of the cutting blade 41, thereby the amount of chips after cutting can be reduced, which can lead to an improvement in yield.

As described above, the pressing plate 53 is provided to be movable between the pressing position (see Figure 2) where the pressing plate 53 presses the plate body 1 to the conveyor 200 and the retracted position (see Figure 1) where the pressing plate 53 is retracted from the pressing position. The pressing position is a position closer to the placement surface of the conveyor 200 or the stand 2 than the surface of the plate body 1 in the Z-axis direction in the figures because the pressing plate 53 presses the plate body 1 downward (toward the conveyor 200 or the stand 2) and can be set in accordance with the thickness of the plate body 1. The retracted position is not particularly limited as long as the pressing plate 53 can avoid contact with the plate body 1.

With regard to the pressing plate 53 shown in the figures, there is exemplified a configuration such that the pressing plate 53 is connected to the above-described movable mechanism (air cylinder) 51 via a mounting shaft part 52, but the configuration of the pressing plate 53 is not particularly limited as long as the pressing plate 53 can press the plate body 1 and release the pressing. In addition, the mounting shaft part 52 and the pressing plate 53 are provided, in the Y-axis direction in the figures, inside the hood 31 (on the back side of the paper surface in the Y-axis direction) and outside the cutting blade 41 but may be provided outside the hood 31 (on the front side of the paper surface in the Y-axis direction).

As shown in Figure 1 and Figure 2, the pressing plate 53 preferably has a pressing surface part 53a parallel to the surface of the plate body 1 being conveyed by the conveyor 200 and an inclined surface part 53b having an upstream end part in the conveying direction (the X-axis direction in the figures) rising and having a predetermined angle with respect to the surface of the plate body 1. The pressing plate 53 having such a configuration can press the plate body 1 by the pressing surface part 53a at the time of cutting and can easily cope with variations in the degree of warp of the plate body 1 by the inclined surface part 53b. Further, even in the case where the timing at which the pressing plate 53 returns to the retracted position is slightly shifted before the next plate body 1 is conveyed after the plate 1 is cut with the cutting blade 41, when the pressing plate 53 has the inclined surface part 53b, thereby collision with the side surface of the plate 1 along the thickness direction (the Z-axis direction in the figures) on the side where the plate body 1 is being conveyed toward the cutting apparatus 10 can easily be avoided. From these viewpoints, the angle of the inclined surface part 53b is preferably 10° to 30°, and more preferably 12° to 17°.

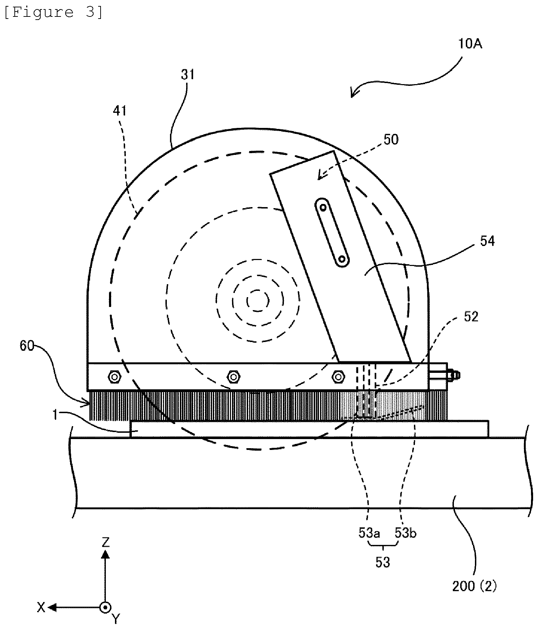

As shown in Figure 3, the cutting apparatus 10A of one embodiment of the present invention preferably includes, in one aspect thereof, a brush part 60 for sweeping chips produced when the plate body 1 is cut with the cutting blade 41. When such a brush part 60 is provided in the cutting apparatus 10A, the chips can be swept with the conveyance of the plate body 1. From the viewpoint of the effect of this brush part 60, the brush part 60 is preferably provided so as to be parallel to the direction of conveying the plate body 1 (the X-axis direction in the figures) and so as to come into contact with the surface of the plate body 1 at the lower part. In addition, in the Y-axis direction in the figures, the brush part 60 is provided on the outer side (the front side of the paper surface in the Y-axis direction) of the attachment shaft part 52 and the pressing plate 53, and the attachment shaft part 52 and the pressing plate 53 are preferably provided on the inner side (the back side of the paper surface in the Y-axis direction) of the brush part 60.

In addition, as shown in Figure 3, the cutting apparatus 10A of one embodiment of the present invention can include, in one aspect thereof, a cover member 54 for the pressing unit 50 in order to protect the pressing unit 50. Further, the cutting apparatuses 10, 10A of one embodiment of the present invention may include, in one aspect thereof, a housing (not shown) that further covers the hood 31 in which the cutter blade 41 is provided. The respective configurations described above can be independently employed in the cutting apparatuses 10, 10A, and can also be arbitrarily combined.

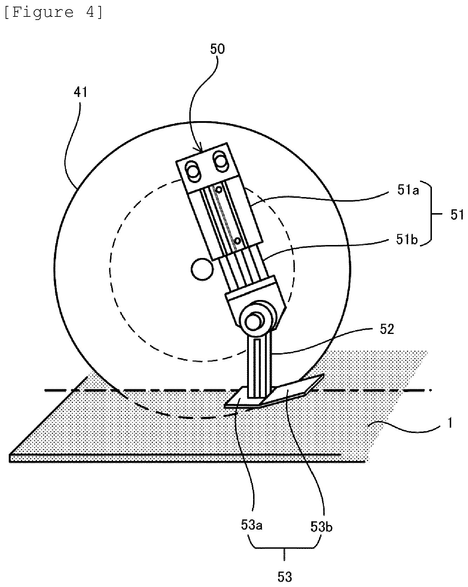

By using the cutting apparatus of the present embodiment described above, a cutting method using the cutting apparatus can be provided. In the cutting method, a method in which the above-described action of the cutting apparatus 10 described above is executed can be adopted. Figure 4 is a schematic perspective view showing a main part of the cutting apparatus 10 for explaining a state where a plate body 1 is being cut using the cutting apparatus 10. In the cutting method of the present embodiment, the plate body 1 can be cut by the cutting blade 41 while being pressed by the pressing plate 53 by the cutting apparatus 10 that executes the above-described operation. Hereinafter, regarding matters other than the actions of the cutting apparatus, preferable configurations and the like in the cutting method will be described from the viewpoint of productivity of products manufactured from the plate body 1.

The object to be cut is preferably a plate body having a long belt-like shape. The long belt-like plate body is preferably conveyed in a direction parallel to the width direction thereof and cut in the width direction parallel to the conveying direction. When the plate body 1 shown in Figure 1 and Figure 2 has a long belt-like shape, the width direction of the plate body 1 is the X-axis direction and the long length direction is the Y-axis direction.

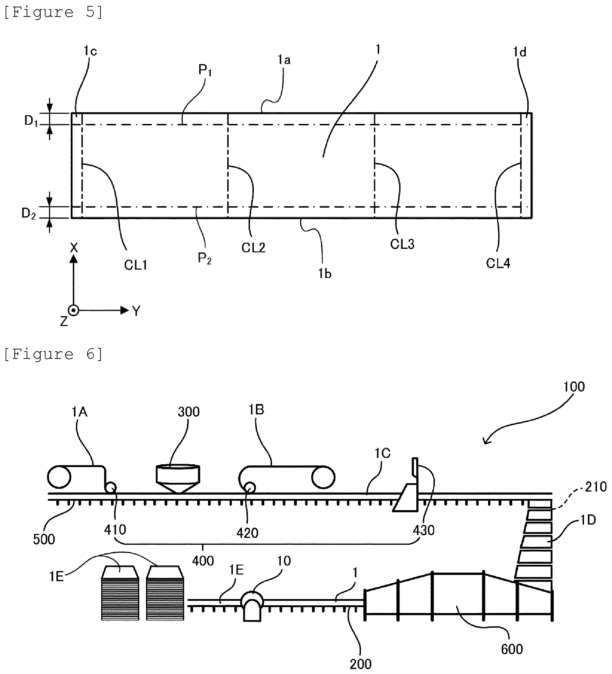

Here, a preferable aspect in the case where the above-described long belt-like plate body 1 is cut by the cutting apparatus 10 (or 10A) of the present embodiment is described with reference to Figure 5. Figure 5 is a schematic plan view of the long belt-like plate body 1. When this long belt-like plate body 1 is a semi-finished product for a gypsum board, the plate body 1 having a width (length between the end surface 1a and the end surface 1b) of about 910 mm and a length between cutting lines (between CL1 and CL2, between CL2 and CL3, between CL3-CL4) of about 1820 mm can be given as one example.

For example, as shown in Figure 5, when the long belt-like plate body 1 is cut and separated at a plurality of cutting lines (in Figure 5, four cutting lines in total; CL1, CL2, CL3, and CL4), the cutting apparatus 10 (or 10A) of the present embodiment is preferably used for cutting the plate body 1 at a cutting line at each end (in Figure 5, the cutting line CL1, CL4) of the plate body 1. The plate body 1 is more preferably cut and separated by cutting with the cutting blades while the end parts 1c, 1d each including a side surface along the width direction of the long belt-like plate body 1 are pressed with the pressing plates 53. In the long belt-like plate body 1, a large warp from the center toward each end 1c, 1d in the longitudinal direction is likely to occur. By using the cutting apparatuses 10 (or 10A) of the present embodiment, the long belt-like plate body 1 can be cut with the cutting blades 41 while the end parts 1c, 1d of the plate body 1 are pressed with the pressing plates 53. Therefore, even if a warp occurs at end parts 1c, 1d as described above, the plate body 1 can be cut in a state where a gap between the plate body 1 and the part below the plate body 1 (the conveyor 200 or the stand 2) due to the warp is unlikely to occur and the end parts 1c, 1d can be cut and separated from the product with neat cut ends without fluffing of the board lining paper.

Note that in the cutting apparatus 10 (or 10A) that cuts and separates the end part 1c by cutting at the cutting line CL1 and the cutting apparatus 10 (or 10A) that cuts and separates the end part 1d by cutting at the cutting line CL4, the positions where the pressing units 50 are provided can be made symmetrical. Specifically, the cutting apparatus that performs cutting at the cutting line CL1 is installed such that the pressing unit 50 is to the left of the cutting line CL1 in Figure 5, and the cutting apparatus that performs cutting at the cutting line CL4 is installed such that the pressing unit 50 is to the right of the cutting line CL4 in Figure 5. By installing the pressing plate 53 at the side on the outer side in the vicinity of the cutting blade 41 (on the end part side of the plate body 1) in this manner, a warp of the plate body 1, even if it occurs, can be suppressed more effectively and the end parts 1c, 1d can be cut and separated from the product with neat cut ends without fluffing of the board lining paper.

In addition, the cutting apparatus 10 (or 10A) of the present embodiment may also be used for cutting other than cutting at the cutting lines CL1, CL4 at both ends of the plate body 1, for example, cutting at the cutting lines CL2, CL3. However, the cutting apparatus is not limited to the cutting apparatus 10 (or 10A) of the present embodiment, and, for example, a simpler cutting apparatus such that the pressing unit 50 (pressing plate 53) is removed from the cutting apparatus 10 (or 10A) of the present embodiment (an apparatus which is the same as the cutting apparatus of the present embodiment except that it does not include a pressing unit) can also be used.

Further, the cutting apparatuses 10, 10A are preferably configured such that an installation position in the length direction (the Y-axis direction in Figure 5) is adjustable in accordance with the size of the plate body 1. Furthermore, in the cutting method of the present embodiment, cutting is preferably performed in a state where two long belt-like plate bodies 1 are stacked.

According to the cutting apparatuses 10, 10A of the present embodiment and the cutting method of the present embodiment, which are described above in detail, an action of cutting the plate body 1 with the cutting blade 41 can be performed while the pressing plate 53 moved to the pressing position presses the plate body 1 downward at the side position of the cutting blade 41. Therefore, even if the plate body 1 is warped, it is possible to perform cutting, by pressing the plate body 1 with the pressing plate 53, in a state where a gap between the plate body 1 and the conveyor 200 or the stand 2 due to the warp is unlikely to occur. As a result, even if a plate body 1 to be cut is warped, it is possible to obtain a cut product of the same quality as when a plate body which is not warped is cut. For example, even when the plate body 1 is a semi-finished product for a gypsum board, which is likely to be warped, and is actually warped (further, even when the plate body 1 is a plate-shaped semi-finished product immediately after drying at the time of finish in the manufacturing process of a gypsum board, which is more likely to be warped, and is actually warped), it is possible to suppress the occurrence of fluffing of the board lining paper on the cut surface of the plate-shaped semi-finished product, as well as when a plate-shaped semi-finished product which is not warped is cut.

In addition, according to the cutting apparatuses 10, 10A of the present embodiment and the cutting method of the present embodiment, it is also possible to continuously perform cutting the plate body 1 with the cutting blade 41 that cuts the plate body 1 in a direction parallel to the direction of conveying the plate body 1 (the X-axis direction in the figures) and pressing the plate body 1 with the pressing plate 53 without stopping the conveyance of the plate body 1 in the conveying direction. Thereby, production efficiency of products manufactured from the plate body 1 can further be enhanced. Note that the plate body 1 before being conveyed in the conveying direction does not have to be conveyed completely continuously and may be stopped intermittently, or the plate body 1 being conveyed in the conveying direction may be conveyed to the cutting apparatus 10 while being stopped intermittently.

### <Apparatus for Manufacturing Gypsum Board>

Next, an apparatus for manufacturing a gypsum board (hereinafter, sometimes simply referred to as "gypsum board manufacturing apparatus") of one embodiment of the present invention will be described. The apparatus for manufacturing a gypsum board of the present embodiment includes the above-described cutting apparatus of one embodiment of the present invention and can include the above-described cutting apparatus 10, 10A (hereinafter, collectively referred to as cutting apparatus 10). Hereinafter, the apparatus for manufacturing a gypsum board of the present embodiment will be described with reference to Figure 6. Figure 6 is a schematic configuration diagram of the apparatus for manufacturing a gypsum board of one embodiment of the present invention. A gypsum board manufacturing apparatus 100 includes the above-described cutting apparatus 10. The gypsum board manufacturing apparatus 100 preferably includes, in addition to the above-described cutting apparatus 10, various apparatuses which will be described below because such an apparatus serves as a sequential manufacturing line for manufacturing a gypsum board 1E from raw materials to make it possible to manufacture the gypsum board 1E efficiently.

### (Mixing Apparatus)

For example, when raw materials for a core material in the gypsum board 1E needs to be mixed to obtain a gypsum slurry in the gypsum board manufacturing apparatus 100, the gypsum board manufacturing apparatus 100 can include a mixing apparatus (mixer) 300 that mixes the raw materials. A step (preparation step) of preparing a gypsum slurry can be executed using the mixing apparatus 300. A set body (gypsum set body) of the gypsum slurry is the core material of the gypsum board 1E, and the main component of the core material is dihydrate gypsum.

The mixing apparatus 300 can be disposed at a predetermined position associated with a conveyance line for board lining paper 1A, 1B, which will be described later, for example, above or beside the conveyance line. In the mixing apparatus 300, calcined gypsum and water, and various additives as necessary are kneaded, and thus a gypsum slurry can be prepared. Calcined gypsum and some of the additives may be supplied to the mixing apparatus 300 after being preliminarily mixed. The mixing apparatus 300 may be provided with an apparatus (not shown) for supplying calcined gypsum and additives to the mixing apparatus 300; a suppling pipe (not shown) for suppling the gypsum slurry prepared with the mixing apparatus 300 to a molding apparatus 400 which will be described later; and the like.

Calcined gypsum, which is a main component of the raw materials for the core material of the gypsum board 1E, is also called calcium sulfate-1/2 hydrate and is an inorganic composition having hydraulicity. As the calcined gypsum, it is possible to use any one of β calcined gypsum and α calcined gypsum singly or a mixture of the two. Here, β calcined gypsum is obtained by calcining single gypsum of natural gypsum, by-product gypsum, flue-gas desulfurization gypsum, or the like in the air or by calcining mixed gypsum thereof in the air; and α calcined gypsum is obtained by calcining the same in water (including steam). When calcined gypsum is manufactured from raw material gypsum (gypsum dihydrate) in the gypsum board manufacturing apparatus 100, the gypsum board manufacturing apparatus 100 may include a dryer or calcination furnace (both not shown) for raw material gypsum. In that case, a step (calcination step) of calcining raw material gypsum to obtain calcined gypsum may be executed in the calcination furnace.

Examples of the above-described additives include adhesion improvers (such as, for example, starches and polyvinyl alcohols) for improving the adhesion between the core material (gypsum set body) and the board lining paper (cover paper 1A and backing paper 1B), fire-resistant materials including inorganic fibers such as glass fibers, light weight aggregates, and vermiculite, setting retarders, setting accelerators, water reducing agents, bubble size adjusters such as sulfosuccinate-type surfactants, water repellents such as silicone and paraffin, organic carboxylic acids and/or organic carboxylates. One of the additives or two or more of the additives may be used.

### (Molding Apparatus)

When the gypsum board manufacturing apparatus 100 includes the above-described mixing apparatus 300 or when the gypsum board 1E is manufactured using the gypsum slurry in the gypsum board manufacturing apparatus 100, the gypsum board manufacturing apparatus 100 can include a molding apparatus 400 that molds the gypsum slurry. A step (molding step) of manufacturing a continuous laminate 1C in which the gypsum slurry is covered with the board lining paper 1A, 1B can be executed using the molding apparatus 400. The molding apparatus 400 can also have a function of determining the thickness and width of the continuous laminate 1C.

The molding apparatus 400 can include a molding machines 410, 420 that mold the gypsum slurry. Further, the molding apparatus 400 may be provided with a roll coater (not shown) for preliminarily applying the gypsum slurry on the surface of the cover paper 1A and/or the backing paper 1B before the gypsum slurry is poured into the space between the cover paper 1A and the backing paper 1B of the board lining paper. The roll coater can have a plurality of rolls such as, for example, a coating roll, a receiving roll, and a residue-removing roll, depending on the purpose.

Further, the molding apparatus 400 can include a cutting machine 430 that roughly cuts the continuous laminate 1C obtained with the molding machines 410, 420 for every predetermined length. The molding apparatus 400 is preferably designed such that the continuous laminate 1C reaches the cutting machine 430 in a state where the setting reaction of the gypsum slurry between the cover paper 1A and the back paper 1B of the board lining paper has proceeded to some extent while the continuous laminate 1C is being conveyed by a conveying apparatus 500 (belt conveyor or the like). The continuous laminate 1C is roughly cut for every predetermined length with the cutting machine 430, and thereby belt-shaped laminated plate bodies 1D each having the predetermined length as a length direction and a direction orthogonal to the length direction as a width direction can be obtained.

### (Conveyor)

When the gypsum board manufacturing apparatus 100 includes the above-described mixing apparatus 300 and the molding apparatus 400 or when the gypsum board 1E is manufactured using the gypsum slurry in the gypsum board manufacturing apparatus 100, the gypsum board manufacturing apparatus 100 can include a conveyor 210 that conveys the laminated plate body 1D to the next step. The conveyor 210 may be the same one as the conveyor 200 that conveys the plate body 1 to the cutting apparatus 10, which is described above in the description of the cutting apparatus 10. A step (conveying step) of conveying the laminated plate body 1D and the plate body (the semi-finished product for a gypsum board) 1 can be executed using the conveyors 210, 200.

### (Drying Apparatus)

When the gypsum board manufacturing apparatus 100 includes the above-described mixing apparatus 300 and the molding apparatus 400 or when the gypsum board 1E is manufactured using the gypsum slurry in the gypsum board manufacturing apparatus 100, the gypsum board manufacturing apparatus 100 can include a drying apparatus 600 that dries and set the gypsum slurry in the laminated plate body 1D. A step (drying step) of drying and setting the gypsum slurry in the laminated plate body 1D (the gypsum slurry sandwiched between the cover paper 1A and the backing paper 1B of the board lining paper) can be executed using the drying apparatus 600. After the gypsum slurry in the laminated plate bodies 1D is dried and set through the drying step, the laminated plate body 1D is supplied to the subsequent cutting apparatus 10, and thus the plate body (the semi-finished product for a gypsum board) to be cut 1 can be obtained.

From the viewpoint of productivity of the gypsum board 1E, the drying apparatus 600 is preferably the drying apparatus 600 provided in the conveyance path for the laminated plate body 1D by the conveyors 210, 200 such that the laminated plate body 1D is dried and set while being conveyed by the conveyors 210, 200. While the laminated plate body 1D is conveyed in the drying furnace 600 by the conveyors 210, 200, setting (hydration reaction) of the calcined gypsum in the laminated plate body 1D and removal of excess water can be performed.

### (Cutting Apparatus)

The gypsum board manufacturing apparatus 100 can convey the plate body 1 as the semi-finished product for a gypsum board, subjected to the above-described drying step, to the cutting apparatus 10 by the conveyor 200. As described above, the cutting apparatus 10 can execute a step (cutting step) of cutting the plate body 1 as finish, making it possible to obtain the gypsum board 1E having a neatened end side surface or the gypsum board 1E formed into arbitrary dimensions as a product.

### (Additional Configuration)

When two plate bodies 1 are simultaneously cut, by the cutting apparatus 10, in a state where the two plate bodies 1 are stacked, the gypsum board manufacturing apparatus 100 can also include, on the upstream side of the cutting apparatus 100 in the conveyance path by the conveyor 200, a mechanism (not shown) which stacks the two plate bodies 1.

According to the gypsum board manufacturing apparatus 100 of the present embodiment described above, since the above-described cutting apparatus 10 is included, the cutting step can be performed under a situation in which there is a relatively high possibility that the plate body 1 is warped. Specifically, the cutting step can be performed to the plate body 1 at the time of finish just after the drying step in the manufacturing process of the gypsum board 1E. Even if the plate body 1 is warped, it is possible to perform cutting, by pressing the plate body 1 with the pressing plate 53 of the cutting apparatus 10, in a state where a gap between the plate body 1 and the conveyor 200 or the stand 2 due to the warp is unlikely to occur. Therefore, even if a plate body 1 to be cut is warped, it is possible to obtain the gypsum board 1E of the same quality as when a plate body which is not warped is cut. Further, it is possible to manufacture the gypsum board 1E in which the occurrence of fluffing of the board lining paper on the cut surface of the plate body 1 is suppressed. Accordingly, the gypsum board 1E excellent in quality can be manufactured in a highly efficient manner.

The cutting apparatus, cutting method, and the apparatus for manufacturing a gypsum board of the above-described embodiment can take configurations as follows.
[1] A cutting apparatus that is provided on a conveyor for conveying a plate body and cuts the plate body being conveyed by the conveyor, the cutting apparatus including: a cutting blade that cuts the plate body in a direction parallel to a direction of conveying the plate body; and a pressing unit having, at a side position of the cutting blade, a pressing plate provided to be movable between a pressing position where the pressing plate presses the plate body and a retracted position where the pressing plate is retracted from the pressing position, wherein the cutting apparatus cuts the plate body with the cutting blade while pressing the plate body with the pressing plate.
[2] The cutting apparatus according to [1], wherein the pressing unit further has an air cylinder that moves the pressing plate between the pressing position and the retracted position.
[3] The cutting apparatus according to [2], wherein the pressing unit drives the air cylinder in accordance with a position of the plate body.
[4] The cutting apparatus according to [2] or [3], wherein when the end part of the plate body is conveyed to a predetermined position below the pressing plate, the pressing unit drives the air cylinder downward to move the pressing plate to the pressing position to press the plate body with the pressing plate.
[5] The cutting apparatus according to any one of [2] to [4], wherein the pressing unit drives the air cylinder upward to move the pressing plate to the retracted position immediately before cutting of the plate body is finished.
[6] The cutting apparatus according to any one of [1] to [5], wherein the pressing unit is configured to be capable of making force for pressing the plate body with the pressing plate constant.
[7] The cutting apparatus according to [6], wherein the pressing unit is configured to be capable of adjusting the force for pressing the plate body with the pressing plate in accordance with at least one state of a thickness and a warp of the plate body.
[8] The cutting apparatus according to any one of [1] to [7], wherein the pressing plate has a pressing surface part parallel to a surface of the plate body being conveyed by the conveyor, and an inclined surface part having an upstream end part in the conveying direction rising and having a predetermined angle with respect to the surface of the plate body.
[9] The cutting apparatus according to any one of [1] to [8] , wherein the cutting blade is a disc-shaped rotary blade.
[10] The cutting apparatus according to any one of [1] to [9], wherein the plate body is a semi-finished product for a gypsum board.
[11] An apparatus for manufacturing a gypsum board, including the cutting apparatus according to any one of [1] to [10].
[12] A cutting method using the cutting apparatus according to any one of [1] to [10].
[13] The cutting method according to [12], wherein the plate body has a long belt shape, and the long belt-like plate body is conveyed in a direction parallel to a width direction thereof and is cut.
[14] The cutting method according to [13], wherein the end part including the side surface along the width direction of the long belt-like plate body is cut and separated with the cutting blade while being pressed by the pressing plate.
[15] The cutting method according to [13] or [14], wherein cutting with the cutting blade is performed in a state where two long belt-like plate bodies are stacked.

### Reference Signs List

- 1: Plate body
- 10: Cutting apparatus
- 41: Cutting blade
- 50: Pressing unit
- 51: Movable mechanism (air cylinder)
- 53: Pressing plate
- 200: Conveyor

## Claims

1. A cutting apparatus that is provided on a conveyor for conveying a plate body and cuts the plate body being conveyed by the conveyor, the cutting apparatus comprising:
a cutting blade that cuts the plate body in a direction parallel to a direction of conveying the plate body; and
a pressing unit comprising, at a side position of the cutting blade, a pressing plate provided to be movable between a pressing position where the pressing plate presses the plate body and a retracted position where the pressing plate is retracted from the pressing position, wherein
the cutting apparatus cuts the plate body with the cutting blade while pressing the plate body with the pressing plate.

2. The cutting apparatus according to claim 1, wherein the pressing unit further comprises an air cylinder that moves the pressing plate between the pressing position and the retracted position.

3. The cutting apparatus according to claim 2, wherein the pressing unit drives the air cylinder in accordance with a position of the plate body.

4. The cutting apparatus according to claim 2 or 3, wherein when the end part of the plate body is conveyed to a predetermined position below the pressing plate, the pressing unit drives the air cylinder downward to move the pressing plate to the pressing position to press the plate body with the pressing plate.

5. The cutting apparatus according to any one of claims 2 to 4, wherein the pressing unit drives the air cylinder upward to move the pressing plate to the retracted position immediately before cutting of the plate body is finished.

6. The cutting apparatus according to any one of claims 1 to 5, wherein the pressing unit is configured to be capable of making force for pressing the plate body with the pressing plate constant.

7. The cutting apparatus according to claim 6, wherein the pressing unit is configured to be capable of adjusting the force for pressing the plate body with the pressing plate in accordance with at least one state of a thickness and a warp of the plate body.

8. The cutting apparatus according to any one of claims 1 to 7, wherein the pressing plate comprises a pressing surface part parallel to a surface of the plate body being conveyed by the conveyor, and an inclined surface part having an upstream end part in the conveying direction rising and having a predetermined angle with respect to the surface of the plate body.

9. The cutting apparatus according to any one of claims 1 to 8, wherein the cutting blade is a disc-shaped rotary blade.

10. The cutting apparatus according to any one of claims 1 to 9, wherein the plate body is a semi-finished product for a gypsum board.

11. An apparatus for manufacturing a gypsum board, comprising the cutting apparatus according to any one of claims 1 to 10.

12. A cutting method using the cutting apparatus according to any one of claims 1 to 10.

13. The cutting method according to claim 12, wherein
the plate body has a long belt shape, and
the long belt-like plate body is conveyed in a direction parallel to a width direction thereof and is cut.

14. The cutting method according to claim 13, wherein the end part including the side surface along the width direction of the long belt-like plate body is cut and separated with the cutting blade while being pressed by the pressing plate.

15. The cutting method according to claim 13 or 14, wherein cutting with the cutting blade is performed in a state where two long belt-like plate bodies are stacked.
